Europäisches Patentamt

(19) European Patent Office

Office européen des brevets

(11) Numéro de publication: **0 143 718**
**B1**

(12) ## FASCICULE DE BREVET EUROPÉEN

(45) Date de publication du fascicule du brevet:
22.07.87

(51) Int. Cl.⁴: **H 02 B 1/08**

(21) Numéro de dépôt: 84402413.3

(22) Date de dépôt: 26.11.84

(54) Coffret pour appareillage electrique susceptible d'etre assemble lors de l'installation.

(30) Priorité: 01.12.83 FR 8319380

(43) Date de publication de la demande:
05.06.85 Bulletin 85/23

(45) Mention de la délivrance du brevet:
22.07.87 Bulletin 87/30

(84) Etats contractants désignés:
AT CH DE FR GB IT LI NL SE

(56) Documents cité:
FR-A-2 265 302

(73) Titulaire: MERLIN GERIN, Rue Henri Tarze, F-38050 Grenoble Cédex (FR)

(72) Inventeur: Buet, Jacques, Chevillard, F-73250 St. Pierre D'Albigny (FR)
Inventeur: Chambron, Robert, Le Clos "Le Pechet", F-73250 St. Pierre D'Albigny (FR)
Inventeur: Rebesco, Joseph, Impasse de la Villa Romaine Arbin, F-73800 Montmelian (FR)

(74) Mandataire: Kern, Paul, Merlin Gerin Sce. Brevets 20, rue Henri Tarze, F-38050 Grenoble Cedex (FR)

LIBER, STOCKHOLM 1987

EP 0 143 718 B1

## Description

L'invention est relative à un coffret parallélépipédique pour appareillage électrique comportant un panneau de fond en forme de plaque, qui porte les éléments de support de l'appareillage logé dans le coffret et quatre piliers fixés aux quatre coins de la plaque pour former les quatre arêtes du coffret, auxquelles sont fixées les quatre parois latérales du coffret, en forme de plaques ayant des bords latéraux repliés en équerre et formant un cadre susceptible d'être mis en place pour coiffer le panneau de fond, après montage de l'appareillage et câblage du coffret et d'être obturé par un panneau avant en forme de plastron ou de porte.

Un coffret du genre mentionné est utilisé pour le logement de l'appareillage électrique d'alimentation d'une installation électrique. Pour faciliter le montage et le raccordement des différents appareils électriques, les quatre parois latérales du coffret sont séparables du panneau du fond. Le cadre enlevé, les appareils peuvent être aisément fixés sur un châssis ou une platine solidaire du fond et être raccordés aux conducteurs d'alimentation et de départ. Un coffret connu (document EP-A-0026331) comporte quatre piliers en forme de cornières, sur lesquelles sont vissées les plaques de dessus et de dessous, les bords repliés des plaques latérales étant glissés, avant serrage des vis, entre les cornières et les plaques de dessus et de dessous pour être coincés lors du serrage. Ce mode de fixation est difficile à mettre en oeuvre et nécessite un espace libre autour du coffret pour le passage du tournevis et la mise en place des plaques latérales.

La présente invention a pour but de permettre la réalisation d'un coffret à volume de stockage réduit pouvant être assemblé ou démonté à partir de la face avant, le coffret étant partiellement ou totalement emprisonné latéralement. Ce but est atteint par la mise en oeuvre des caractéristiques de la revendication 1.

Les éléments constitutifs du coffret sont avantageusement des tôles plates qui peuvent être facilement empilées et emballées dans un volume extrêmement réduit. Le panneau de fond constitue l'élément de base du coffret, sur lequel sont fixés le châssis ou la platine de support de l'appareillage électrique ainsi que les quatre piliers formant l'ossature du coffret. Les quatre piliers s'étendent selon les quatre arêtes latérales du coffret et constituent les éléments de support du panneau avant ou de la porte du coffret. Les piliers sont en matière plastique moulée et présentent des faces d'appui et de fixation des tôles adjacentes, ainsi que des rainures ou évidements recevant les bordures des tôles à emboîtement ou à glissement. La fixation des tôles aux piliers et/ou au panneau de fond peut être réalisée par des vis ou des boulons ou par simple emboîtement ou clipsage.

Le bord arrière de la plaque présente un décrochement, qui s'emboîte sous le rebord replié du panneau de fond, pour maintenir la plaque tout en conservant une surface externe plane. L'ensemble est conçu pour une mise en place ou un démontage des piliers, des plaques latérales et de la porte à partir de l'avant du coffret, le panneau de fond étant fixé à un mur et l'appareillage étant monté et câblé. Le coffret peut être fixé dans un coin ou entouré d'autres coffrets, sans complication du montage ou du démontage. Après mise en place des plaques ces dernières sont maintenues par simple emboîtement, la vis assurant uniquement leur fixation ou verrouillage. Cette vis solidarise la partie avant des plaques au pilier et elle est coiffée par le panneau ou la porte avant pour empêcher tout démontage, le coffret étant fermé.

Les plaques peuvent être fractionnables longitudinalement pour ménager un passage vers l'extérieur ou vers un coffret adjacent. Lors d'une juxtaposition de plusieurs coffrets les parois adjacentes peuvent être enlevées, les deux piliers étant avantageusement remplacés par un pilier double. Il est clair que chaque plaque peut être en une ou plusieurs parties emboîtables.

D'autres avantages et caractéristiques ressortiront plus clairement de la description qui va suivre d'un mode de mise en oeuvre de l'invention, donné à titre d'exemple non limitatif et représenté aux dessins annexés, dans lesquels:
- la figure 1 est une vue schématique en perspective d'un coffret selon l'invention, en cours de montage;

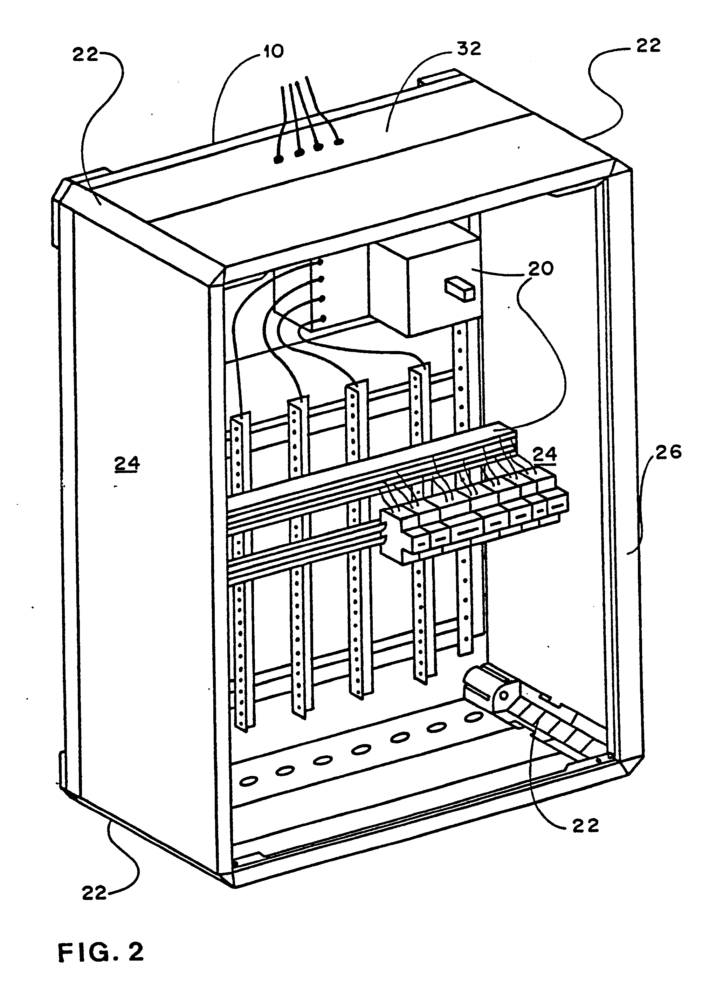

- la figure 2 est une vue analogue à celle de la figure 1, montrant le coffret monté avant la mise en place du panneau ou de la porte avant;
- la figure 3 est une vue en coupe d'un pilier de fixation selon l'invention.

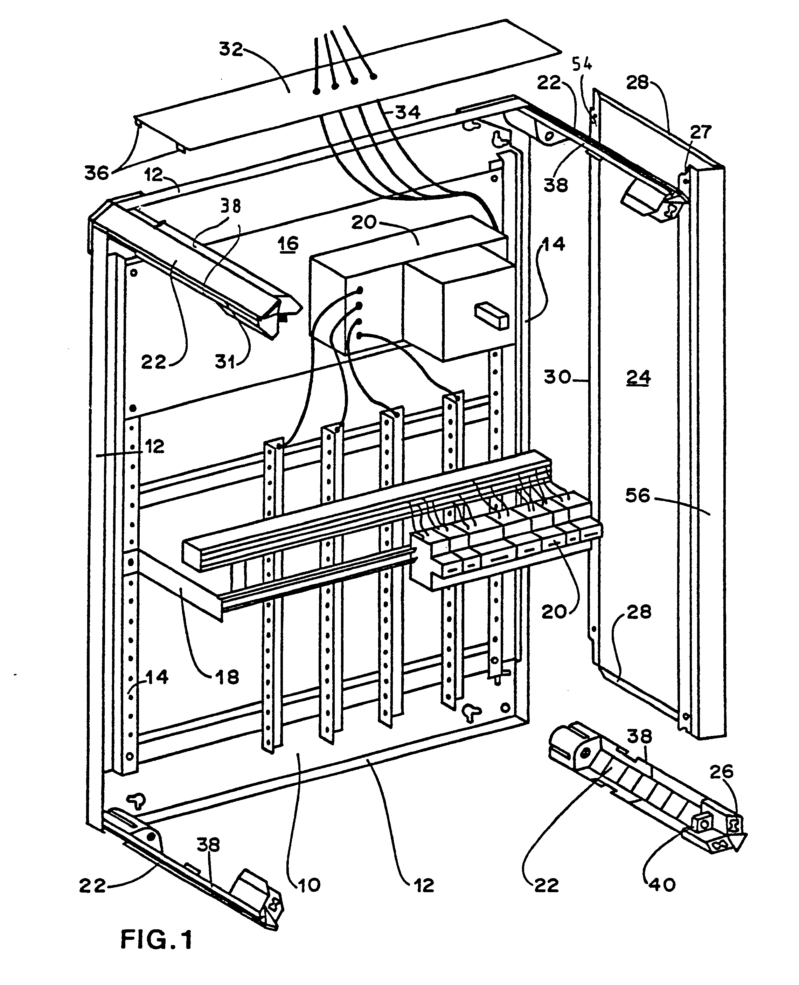

Sur les figures, un panneau de fond 10 est constitué par une plaque de tôle rectangulaire à rebords 12 repliés en équerre. Sur le panneau de fond 10 sont fixés des montants 14 susceptibles de recevoir une platine 16 ou un châssis 18 de fixation d'appareils électriques 20. Aux quatre coins du panneau 10 sont fixés des piliers 22 en matière plastique moulée dont l'un est représenté sur la figure 1 en cours de montage. Les piliers 22 s'étendent perpendiculairement au panneau de fond suivant les arêtes du coffret et constituent les supports des parois latérales et du panneau avant du coffret. Les parois latérales sont constituées par des plaques de tôles 24 dont le bord avant 56 est replié en arrière pour s'enfourcher sur l'extrémité 26 du pilier 22 et permettre une fixation, par exemple par une vis 58. La vis 58 traverse un orifice 27 ménagé dans un repli 29, du bord 56 et se visse dans une patte taraudée 40 du pilier 22. La vis 58 est commune aux deux tôles 24 adjacentes et elle est coiffée par la porte en position fermée. Les bords latéraux des tôles ou plaques 24 sont appliqués sur des faces 38 des piliers 22 en faible retrait pour présenter une face externe plane et leurs extrémités 28 sont repliées en équerre pour s'insérer dans des rainures 31, ménagées dans le pilier 22. Le bord arrière 30 de la plaque 24 vient s'emboîter, en position montée de la plaque, derrière le rebord 12 du panneau de fond, avec avantageusement un léger décrochement conservant la continuité et la planéité de la surface externe du coffret. Il est clair que d'autres moyens de fixation sont concevables, notamment une fixation par simple emboîtement, par exemple du type à tiroir, la plaque étant glissée à partir de l'avant dans des rainures ménagées dans les piliers 22. La plaque de dessus est avantageusement en deux éléments dont seul l'un, 32, est représenté sur la fig. 1. L'élément 32 présente des orifices de passage des conducteurs d'alimentation 34 et est fixé au pilier 22 et/ou au panneau de fond par des pattes de fixation 36 s'accrochant sur des parties conjuguées des piliers ou du panneau 10, en l'occurrence sur le rebord replié 12.

Les charnières (non représentées) de la porte avant du coffret peuvent être fixées par les vis 58 aux pattes 40 et un plastron (non représenté) peut être solidarisé par tout moyen approprié aux parois 24 ou aux piliers 22. Les piliers 22 sont tous identiques et peuvent être fixés au panneau 10, par exemple par des vis à partir de la face avant du coffret, ou par des boulons à écrou prisonnier solidaire du panneau 10.

Le montage du coffret livré en pièces détachées est réalisé par le distributeur ou l'installateur de la manière suivante:

Les piliers 22 peuvent être fixés au panneau 10 avant la mise en place de ce dernier, par exemple accroché à un mur ou éventuellement après montage de l'appareillage électrique. Les montants 14 sont fixés au panneau 10, si ceux-ci n'ont pas été montés en usine et les platines ou châssis 16, 18 appropriés sont fixés aux montants 14. L'appareillage 20 est mis en place ainsi que les connexions électriques entre ces appareils et les conducteurs d'entrée ou de départ du coffret. Toutes ces opérations sont particulièrement simples, même si le panneau 10 est déjà fixé au mur, l'ensemble des appareils étant facilement accessible. Après montage et raccordement il suffit de fixer les piliers 22 sur le panneau 10, si cette opération n'a pas été effectuée au préalable et de mettre en place les plaques latérales 24 en emboîtant les rebords 28 dans les rainures 31 des piliers 22 et en glissant les plaques 24 vers le fond pour emboîter le bord arrière 30 et le bord avant 56. Après fixation des parois latérales 24 par les vis 58 il suffit de mettre en place le plastron et/ou la porte avant fixée par des charnières (non représentées).

Le coffret est réalisé à partir d'un nombre limité d'éléments standards et son assemblage est effectué par simple emboîtement, les éléments étant maintenus dès leur mise en place.

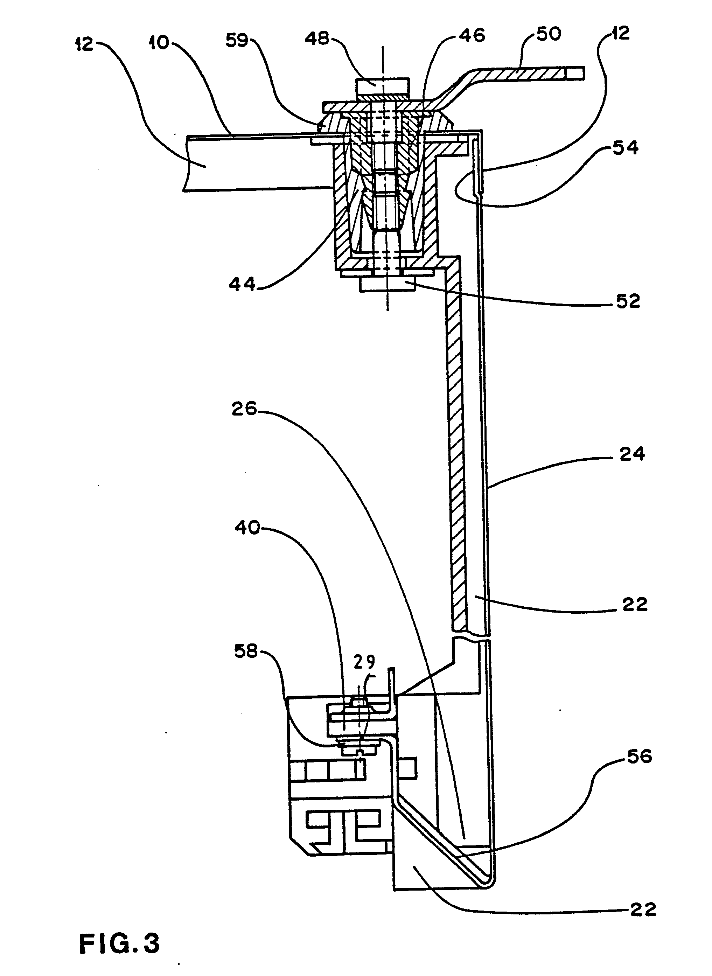

La figure 3 illustre en détail la fixation et la réalisation du pilier. Un goujon de centrage 44 comporte dans sa partie inférieure une embase 59 servant à entretoiser le coffret du mur. Ce goujon traverse par un orifice le panneau 10 en faisant saillie vers la face avant du coffret. Dans le goujon est encliqueté un insert 46 susceptible de recevoir à vissage une vis 48 de fixation d'une patte 50 et du côté opposé une vis 52 de fixation du pilier 22. L'extrémité du pilier 22 s'emboîte sur le goujon 44 et est maintenue par la vis 52. Le goujon 44 et la patte 50 sont mis en place avant la fixation du panneau 10 au mur par les pattes 50, tandis que le pilier 22 peut être emboîté et fixé par la vis 52 sur le goujon 44 en fin de montage à partir de la face avant du coffret. La plaque latérale 24 présente sur son bord 30 adjacent au panneau 10 un décrochement 54 qui s'engage derrière le rebord 12 du panneau de fond. Le bord frontal 56 de la plaque 24 est replié en arrière pour s'enfiler sur l'extrémité du pilier 22 et être fixé par une vis 58.

Lors d'une juxtaposition de deux coffrets la cloison intermédiaire peut être supprimée, les coffrets étant maintenus accolés par tout moyen approprié. Dans ce cas il est possible de remplacer les piliers 22 dans la zone de jonction des deux coffrets par un pilier unique commun aux deux coffrets réalisant la jonction entre les deux plaques latérales 24 avantageusement sans saillie interne. Il est inutile de décrire un tel pilier qui se déduit de la juxtaposition de deux piliers décrits ci-dessus dont seules les parties d'assemblage des plaques 24 sont conservées ainsi que la fixation au panneau de fond. Cet ensemble du type modulaire présente de plus des avantages de facilité de transport et de stockage.

## Revendications

1. Coffret parallélépipédique pour appareillage électrique comportant un panneau de fond (10) en forme de plaque, qui porte les éléments de support (18) de l'appareillage (20) logé dans le coffret et quatre piliers (22) fixés aux quatre coins de la plaque (10) pour former les quatre arêtes du coffret, auxquelles sont fixées les quatre parois latérales (24) du coffret, en forme de plaques ayant des bords latéraux (28) repliés en équerre et formant un cadre susceptible d'être mis en place, pour coiffer le panneau de fond (10), après montage de l'appareillage et câblage du coffret et d'être obturé par un panneau avant en forme de plastron ou de porte, caractérisé en ce que chaque pilier (22) présente une partie arrière susceptible d'être encastrée sur une partie conjuguée solidaire du panneau de fond (10) et munie d'un moyen de fixation, notamment à vis (52), accessible de l'avant pour une fixation du pilier (22) sur un panneau de fond plaqué à un mur, ledit pilier (22) présentant deux faces (38) perpendiculaires externes d'appui, chacune pourvue d'une rainure (31) longitudinale, en forme de glissière, pour recevoir à emboîtement, en position montée des parois latérales, le bord (28) replié en équerre de la plaque (24) associée, accolée sur la face (38) d'appui du pilier, chaque plaque latérale (24) ayant un bord arrière (30) venant s'enfiler en position montée sous un rebord (12), formé par le bord (12) replié en équerre de la plaque de fond (10) et une partie avant (56) repliée en arrière pour s'enfourcher sur l'extrémité avant (26) du pilier et maintenir la plaque latérale (24) en position montée.

2. Coffret selon la revendication 1, caractérisé en ce que ledit bord arrière (30) présente un décrochement (54) correspondant à l'épaisseur du rebord (12) de la plaque (10) de fond, de manière à présenter une surface externe plane, et que ledit pilier (22) présente sur sa face d'appui (38) un décrochement conjugué permettant un faible décalage vers l'intérieur de la plaque (24), préalable au glissement du bord arrière (30) sous le rebord (12).

3. Coffret selon la revendication 1 ou 2, caractérisé en ce que lesdites rainures (31) en forme de glissières sont ouvertes vers l'avant du pilier (22) pour un glissement des plaques latérales (24) sur les piliers de l'avant du coffret vers l'arrière.

4. Coffret selon la revendication 1, 2 ou 3, caractérisé en ce que la partie avant repliée (56) de la plaque latérale (24) présente un trou (27) en retrait de la face avant du coffret, obturé par le panneau avant, pour recevoir une vis de fixation commune aux deux plaques adjacentes.

5. Coffret selon l'une quelconque des revendications précédentes, caractérisé en ce que les moyens de fixation des piliers (22) au panneau de fond (10) comportent un goujon (44) de centrage susceptible de traverser un orifice ménagé dans ledit panne au et de recevoir à emboîtement l'extrémité associée du pilier (22) fixée, notamment par une vis (52) audit goujon.

6. Coffret modulaire selon l'une quelconque des revendications précédentes, caractérisé en ce qu'il comporte des piliers de liaison de deux plaques latérales jointives coplanaires pour la réalisation de coffrets de plus grande taille.

**Patentansprüche**

1. Parallelipipedisches Gehäuse für elektrisches Gerät mit einer Hinterwand (10) in Form einer Platte, welche die Trag-Elemente (18) des in dem Gehäuse untergebrachten Gerätes trägt, und vier Pfeiler (22), die mit den vier Ecken des Gehäuses befestigt sind, um die vier Kanten des Gehäuses zu bilden, mit denen die vier Seitenwände (24) des Gehäuses verbunden sind, welche plattenförmig sind und seitliche Ränder (28) haben, die rechtwinklig nach hinten gebogen sind und einen Rahmen bilden, der eingesetzt werden kann, um die Hinterwand (10) nach Montierung des Gerätes und Verkabelung des Gehäuses zu bedecken, und der durch eine Vorderplatte in Form eines Bleches oder einer Tür verschlossen werden kann, dadurch gekennzeichnet, dass jeder Pfeiler (22) ein hinteres Teil aufweist, das mit einem mit der Hinterwand (10) verbundenen entsprechenden Teil zusammengefügt ist und mit einem Befestigungsmittel versehen ist, insbesondere mit Schrauben, das von vorne zugänglich ist für die Befestigung des Pfeilers (22) auf einer an eine Mauer gedrückte Hinterwand, wobei der genannte Pfeiler (22) zwei äussere senkrechte Stützflächen (38) aufweist, von denen jede mit einer länglichen Rille (31) in Form einer Gleitschiene versehen ist, um in montierter Lage der Seitenwände, genau sich einfügend, den rechtwinklig nach hinten gebogenen Rand (28) der zugeordneten, mit der Stützfläche (38) des Pfeilers verbundenen Platte (24) aufzunehmen, wobei jede Seitenwand (24) einen hinteren Rand (30) besitzt, der sich in montierter Lage unter eine Krempe schiebt, die von dem rechtwinklig nach hinten gebogenen Rand (28) der Hinterwand (10) gebildet wird, und ein vorderes Teil (56), das nach hinten gebogen ist, um das vordere Ende (26) des Pfeilers zu überdecken und die seitliche Platte (24) in montierter Lage zu halten.

2. Gehäuse nach Anspruch 1, dadurch gekennzeichnet, dass der genannte hintere Rand (30) einen Absatz (54) aufweist, welcher der Dicke der Krempe (12) der Hinterwand (10) entspricht, so um eine äussere, flache Oberfläche aufzuweisen, und dass der genannte Pfeiler (22) auf seiner Stuetzfläche (38) einen zugeordneten Absatz aufweist, der eine geringe Verschiebung zum Innern der Platte (24) erlaubt, bevor der hintere Rand (30) unter die Krempe (12) gleitet.

3. Gehäuse gemäss Anspruch 1 oder 2, dadurch gekennzeichnet, dass die genannten Rillen (31) in Form von Gleitschienen zum vorderen Teil des Pfeilers (22) geöffnet sind für ein Gleiten der Seitenplatten (24) auf den Pfeilern vom vorderen zum hinteren Teil des Gehäuses.

4. Gehäuse gemäss Anspruch 1, 2 oder 3, dadurch gekennzeichnet, dass der zurückgebogene vordere Teil (56) der Seitenplatte (24) eine in der Vorderseite des Gehäuses vertieft liegende Öffnung (27) aufweist, durch die Vorderplatte verschlossen, um eine Befestigungsschraube aufzunehmen, die den beiden neben einander liegenden Platten gemeinsam ist.

5. Gehäuse gemäss irgendeinem der vorhergehenden Ansprüche, dadurch gekennzeichnet, dass die Mittel zur Befestigung der Pfeiler (22) an der Hinterwand (10) einen Zentrierungsbolzen (44) aufweisen, der eine in der genannten Platte vorgesehene Öffnung durchdringen kann und das zugeordnete Ende des Pfeilers (22) empfangen kann, welches insbesondere durch eine Schraube (52) mit dem genannten Bolzen befestigt ist.

6. Modulgehäuse gemäss irgendeinem der vorhergehenden Ansprüche, dadurch gekennzeichnet, dass es Verbindungspfeiler aufweist, für zwei fugenlos aneinanderliegende, koplanare Seitenplatten für die Herstellung von Gehäusen von grösseren Ausmassen.

## Claims

1. Parallelipipedic enclosure for electrical apparatus comprising a rear panel (10) in form of a plate, which bears the support elements (18) of the apparatus (20) housed in an enclosure and four pillars (22) fastened to the four corners of the plate (10) in order to form the four edges of an enclosure, to which are fastened the four side walls (24) of the enclosure, in form of plates having side edges (28) refolded at right angle and constituting a frame which can be mounted in order to cover the rear panel (10) after mounting of the apparatus and wiring of the enclosure, and which can be closed by a front panel in form of a sheet or door, characterized in that each pillar (22) comprises a rear part which can be embedded on a conjugated part linked with the rear panel (10) and equipped with fixing means, particularly with screws (52), that can be reached from the front for fixing the pillar (22) on a rear panel applied against a wall, said pillar (22) comprising two external perpendicular support faces (38), each of which is equipped with a longitudinal slot (31) in form of a slide, in order to receive in a fitted manner, when the side walls are in mounted position, the at right angle refolded edge (28) of the associated plate (24) joined with the support face (38) of the pillar, each side plate (24) comprising a rear edge (30) which slides in mounted position under a bended edge (12) formed by the edge (28) refolded at right angle of the rear plate (10) and a front part (56) refolded to the back to cover the front end (26) of the pillar and to maintain the side plate (24) in mounted position.

2. Enclosure according to claim 1, characterized in that the rear edge (30) presents a break (54) corresponding to the thickness of the bended edge (12) of the rear plate (10), in order to present an external plane surface, and that said pillar (22) has on its support face (38) a conjugated break allowing a small shifting towards the interior of the plate (24) prior to the sliding of the rear edge (30) under the bended edge (12).

3. Enclosure according to claim 1 or 2, characterized in that said slots (31) in form of slides are open at the front part of the pillar (22) for a sliding of the side plates (24) on the pillars from the front part of the enclosure to the rear part.

4. Enclosure according to claim 1, 2 or 3, characterized in that the refolded front part (56) of the side plate (24) presents a hole (27), in retraction from the front face of the enclosure, closed by a front panel, in order to receive a fixing screw common to both adjacent plates.

5. Enclosure according to anyone of the preceding claims, characterized in that the means for fixing the pillars (22) to the rear panel (10) comprise a centering bolt which can cross a hole arranged in said panel and receive in fitted manner the associated end of the pillar (22) fastened to said bolt, particularly by a screw (52).

6. Module enclosure according to anyone of the preceding claims, characterized in that it comprises connection pillars of two joining coplanar side plates for the realization of enclosures of big size.

FIG.1

FIG. 2

**FIG.3**